# EUROPEAN PATENT SPECIFICATION

(11) **EP 4 660 269 B1**
(45) Date of publication and mention of the grant of the patent: **29.04.2026**
(21) Application number: 24180593.6
(22) Date of filing: 06.06.2024
(51) Int. Cl.: C09J 7/20

(54) **DOUBLE-SIDED ADHESIVE TAPE**
DOPPELSEITIGES KLEBEBAND
RUBAN ADHÉSIVE DOUBLE FACE

(43) Date of publication of application: 10.12.2025
(73) Proprietor: Lohmann GmbH & Co. KG, 56567 Neuwied (DE)
(72) Inventor: Smit, Evert, 53177 Bonn (DE); Willmes, Jonas, 56179 Niederwerth (DE); Herzhoff, Carsten, 53773 Hennef (DE); Hoß, Cornelia, 56075 Koblenz (DE)

(56) References cited:
- US-B1- 11 904 585
- HWANG DOH-GYU ET AL: "Kirigami-Inspired Structures for Smart Adhesion", APPLIED MATERIALS & INTERFACES, vol. 10, no. 7, 7 February 2018 (2018-02-07), US, pages 6747 - 6754, XP093214988, ISSN: 1944-8244, DOI: 10.1021/acsami.7b18594

## Description

The invention relates to a double-sided adhesive tape.

There is a strong need for debondable adhesive tapes in many different application fields, such as the automotive industry, the medical industry as well as the construction industry. This is because these types of adhesive tapes allow for both a quick assembly without the need for screwing, welding or sewing steps as well as a quick disassembly, and therefore, an easy repair and recycling of the assembled items.

Known solutions for achieving a debondable adhesive tape include the usage of adhesives that can be melted and separated cohesively, or cured until they lose their tackiness and separated adhesively. Combining the chemical properties necessary for these separation processes with the other requirements of the corresponding application field is difficult, however, and can lead to an unwanted increase in complexity and/or manufacturing costs. Alternatively, multi-layered tapes can comprise intermediate layers specifically designed to be cleaved or weakened to disassemble the tape on demand. Usually, these tapes require specific tools to be disassembled, and the freedom of design is limited by having to add the intermediate layers without negatively influencing the adhesive properties.

US 11,904,585 B1, which is hereby incorporated by reference, discloses a one-sided adhesive tape comprising nonlinear cuts which create hinges and flaps. If the tape is peeled in a direction going from the flaps to the hinges, the flaps are deflected and tug at the hinges, thereby making the force required to peel the tape much greater than when the tape is removed in the opposite direction. This can, for example, be useful for achieving medical patches that are easy to remove without causing a lot of strain on the skin of the user, while at the same time being resistant to an accidental removal due to clothes snagging on an edge of the tape.

However, there are many other applications that require the usage of double-sided tapes, and simply cutting through the tape like it is shown in US 11,904,585 B1 would not allow for a deflection of the flaps, since regardless of which side is being peeled, the other side would still be adhered to one of the bonding partners.

It is an object of the invention to provide a double-sided adhesive tape which improved properties concerning an ability to remove and/or disassemble the tape, adhesion and design. This object is achieved by the features of claim 1, while other embodiments and improvements of the invention may be taken from the dependent claims.

In one embodiment of the invention, the double-sided adhesive tape comprises a first surface with a first adhesive area, and a second surface with a second adhesive area, wherein the first surface and the second surface are opposite to each other, further comprising an adhesive layer and a multitude of cuts, each of the cuts penetrating the adhesive layer and defining a hinge and a flap, and wherein the second surface comprises a multitude of non-adhesive areas, each of the non-adhesive areas covering one of the flaps.

This way, the double-sided adhesive tape can be debonded or disassembled in an easy manner. Advantageously, when peeling the double-sided adhesive tape in a direction going from the hinges to the flaps, separating the second surface from an adjacent surface requires much less force than when peeling in the opposite direction, due to a deflection of the flaps.

The double-sided adhesive tape is a layered unit consisting of one or more layers. A layer is to be understood as a flat or curved object comprising a length and width which are both at least 10 times, preferably at least 15 times a thickness of the object. The double-sided adhesive tape may comprise layers with different thicknesses and/or shapes. Preferably, the layers of the double-sided adhesive tape all share the same shape and are arranged in a sandwich construction. The double-sided adhesive tape may have any shape, for example, in a top view, the double-sided adhesive tape may form a polygon such as a rectangle, an oval such as a circle, or an amorphous shape. The double-sided adhesive tape may only comprise permanent layers configured to be present after an application of the double-sided adhesive tape. Additionally, the double-sided adhesive tape may comprise removable layers configured to be removed during the application the double-sided adhesive tape.

In case of the double-sided adhesive tape comprising multiple permanent layers, the cuts may either be configured to allow for a selective debonding of the double-sided adhesive tape as a whole, or a selective disassembly of the double-sided adhesive tape. The selective disassembly of the double-sided adhesive tape may be achieved by designing the cuts so that they penetrate until they reach a debondable layer comprising the non-adhesive areas. Preferably, the cuts penetrate from the first surface to the second surface. In case of the cuts being configured for a disassembly of the double-sided adhesive tape, the second surface is a surface of the debondable layer.

The layers of the double-sided adhesive tape may be manufactured using any type of suitable manufacturing process. For example, the layers may be formed from a larger piece of material via a die-cutting process or any other material removal process. Alternatively, the layers may be coated, for example via a curtain coating process or a blade coating process. Alternatively, the layers may be printed, for example using an inkjet printing process, a screen printing process, a stereolithography process, a LAM process or a polyjet modeling process.

The double-sided adhesive tape either comprises a carrier layer and a further adhesive layer, wherein the carrier layer is arranged between the adhesive layer and the further adhesive layer and the cuts either penetrate the carrier layer and the further adhesive layer, or just the carrier layer while the further adhesive layer comprises a multitude of gaps arranged over the flaps, or the double-sided adhesive tape is a transfer tape and consists of the adhesive layer as well as one or two removable layers covering adhesive surfaces of the adhesive layer, wherein the adhesive layer comprises fillers and/or foaming agents. The double-sided adhesive tape may also be a wound adhesive tape and part of a double-sided adhesive tape roll comprising a cylindrical core on which the double-sided adhesive tape is wound.

A "double-sided" adhesive tape is to be understood as an adhesive tape configured to adhere two bonding partners to each other, wherein a first bonding partner is placed on a first outer adhesive layer of the adhesive tape, and a second bonding partner is placed on a second outer adhesive layer of the adhesive tape. For example, in case of the double-sided adhesive tape being a transfer tape, the first outer adhesive layer and the second outer adhesive layer are identical to the adhesive layer. In case of the cuts being configured for a debonding of the double-sided adhesive tape, the second surface is a surface of the second outer adhesive layer.

The first surface and the second surface may comprise protrusions, indentations or curvatures. Preferably, the first surface and the second surface are largely flat. "Largely flat" is to be understood as the first surface and the second surface being devoid of any protrusions or indentations extending further than a thickness of the corresponding layer defining the first surface and/or the second surface.

The outer adhesive layers of the double-sided adhesive tape are tacky at least during an application of the double-sided adhesive tape. A "tacky" layer is to be understood as a layer that can form an adhesive bond to a bonding partner solely by placing the bonding partner onto the layer and applying pressure. Preferably, the tacky area forms the adhesive bond without the need to apply heat, radiation or additional chemicals.

The adhesive layer may comprise any type of adhesive. For example, the adhesive layer may comprise an epoxide-based adhesive, a (meth)acrylate-based adhesive, a silicon-based adhesive and/or a rubber-based adhesive. The adhesive layer may comprise at least one hotmelt adhesive. A "hotmelt adhesive" is to be understood as an adhesive that is solid at 25°C and has a melting point, usually in the range of 30-150°C. In a molten state, the hotmelt adhesive is tacky. Preferably, the adhesive layer comprises a pressure-sensitive adhesive. A pressure-sensitive adhesive is to be understood as an adhesive that is tacky at 25°C, before and during application. The pressure-sensitive adhesive may be cured after application and lose its tackiness in a cured state. Alternatively, the pressure-sensitive adhesive may be permanently tacky. The adhesive layer may comprise any type of additive known in the field of adhesive chemistry, such as tackifiers, fillers, foaming agents, curing agents, catalysts, photosensitizers, film formers, electrically conductive particles, thermally conductive particles, electrically isolating particles, thermally isolating particles. When the double-sided adhesive tape is a transfer tape, the adhesive layer comprises fillers and/or foaming agents.

The cuts may point towards the same or different directions and may have identical or different sizes and shapes. Preferably, the cuts are distributed into groups, each group of cuts pointing in the same direction. The cuts of one group may have the same size and/or shape or different sizes and/or shapes. Preferably, all of the cuts have the same shape. For example, if the double-sided adhesive tape comprises sections that differ in the direction of their length axis, each of these sections may comprise a group of cuts pointing towards a direction parallel to the corresponding length axis. Preferably, the cuts together define a peeling direction in which it is easy to peel off the second surface. The peeling direction may be the same for the entire double-sided adhesive tape. Alternatively, the peeling direction may change depending on which section of the double-sided adhesive tape is being peeled. For example, the double-sided adhesive tape may have a rectangular shape, wherein the cuts all point towards the same direction, the direction being parallel to a length axis of the double-sided adhesive tape, allowing for an easy peeling from one end of the double-sided adhesive tape and a difficult peeling from an opposite end of the double-sided adhesive tape. Alternatively, the double-sided adhesive tape may have an oval shape, wherein the cuts all point towards different directions, are arranged in a circular pattern and allow for an easy peeling radially from a center of the pattern and a difficult peeling from any other direction. The invention shall not be limited by the examples given, any type of arrangement of cuts can be used on any shape of double-sided adhesive, with the only limiting factor being the intended way of peeling the double-sided adhesive tape.

The cuts each defining a hinge and a flap is to be understood as the cuts each comprising a starting point, at least one turn and an end point, wherein the hinge is a line between the starting point and the end point and the flap is an area bordered by the cut and the hinge. Preferably, the cut turns by at least 120°, especially preferably at least 150°, between the starting point and the end point. Preferably, the cut turns by at most 240°, especially preferably at most 210°, between the starting point and the end point. The cuts may comprise any number of straight and/or curved sections. The turn may be a corner or a curved section. Each cut may comprise any number of turns. Preferably, the cuts form a shape in the top view, the shape being open towards the hinge. For example, the cuts may form open triangles, open rectangles or any other kind of open polygon, as well as any kind of open oval in the top view.

A "non-adhesive area" is to be understood as an area that is not tacky. The non-adhesive areas covering the flaps is to be understood as each non-adhesive area having the same shape and size as its corresponding flap. This way, when peeling the double-sided adhesive tape in the direction from the flaps to the hinges, the deflection of the flaps can be achieved. The non-adhesive areas may only cover one of the flaps each. Alternatively, the non-adhesive areas may cover multiple flaps and comprise any shape. The non-adhesive areas may be arranged in any regular or irregular pattern and cover any amount of flaps. For example, the non-adhesive areas may form lines arranged in parallel, each line covering a row of flaps.

In a further embodiment of the invention, the second surface comprises at least one discontinuous adhesive, and the non-adhesive areas are areas devoid of adhesive. Preferably, the second surface is defined by a discontinuous adhesive layer of the double-sided adhesive tape. Preferably, each of the non-adhesive areas is an indentation or gap of the discontinuous adhesive layer. In case of the double-sided adhesive tape being a transfer tape, the discontinuous adhesive layer is identical to the adhesive layer. The discontinuous adhesive layer may have a three-dimensional shape comprising indentations. The three-dimensional shape may be manufactured via a 3D printing or a stamping process. This way, the non-adhesive areas can be manufactured in a single step using established processes, thereby reducing a complexity of the manufacturing process.

In a further embodiment of the invention, the second surface comprises at least one curable adhesive, and the non-adhesive areas are areas in which the curable adhesive has been cured to the point of losing its tackiness. Preferably, the second surface is defined by a curable adhesive layer of the double-sided adhesive tape. In case of the double-sided adhesive tape being a transfer tape, the curable adhesive layer is identical to the adhesive layer. The curable adhesive layer may comprise a single curable adhesive or a blend of multiple adhesives, at least one of which being a curable adhesive. Preferably, the curable adhesive layer comprises at least one curing agent, such as a photo initiator for example. Preferably, the curable adhesive layer comprises at least one tackifier, such as a tackifying resin for example. The curable adhesive layer may be cured via radiation or heat. For example, the non-adhesive areas may be manufactured using a radiation-curable adhesive and placing a mask over the radiation-curable adhesive during a curing process, wherein the mask is opaque to the radiation and covers the non-adhesive areas. This way, the non-adhesive areas are flush and a flat double-sided adhesive tape can be achieved. Advantageously, processes that are already used for tape manufacturing can be used for the creation of the non-adhesive areas.

In a further embodiment of the invention, the non-adhesive areas are defined by a masking material arranged on the second surface. The masking material may be reversibly attached to the second surface. Preferably, the masking material is irreversibly attached to the second surface. The masking material may be any kind of film, coating, liner or foil. The masking material may comprise at least one metal, plastic and/or cellulose. The masking material may be attached to the second surface via a coating process, a sputtering process, a printing process or a lamination process. In case that the non-adhesive areas cover more than just a single flap each, the masking material is preferably also penetrated by the cuts. This way, materials and processes which are already used in tape manufacturing can be adapted to create the non-adhesive areas. Advantageously, the non-adhesive areas can be created in a simple and cost-effective manner.

The adhesive layers may be identical or different to each other in terms of a thickness and adhesive composition. The further adhesive layer may comprise any adhesive and additive previously mentioned when describing the adhesive layer. The carrier layer may be a film, foil, woven, nonwoven or foam. The carrier layer may comprise a metal, plastic and/or cellulose material and may comprise a coating made from a further metal, plastic and/or cellulose material. The double-sided adhesive tape may comprise one or two removable layers configured to be removed from a surface of the adhesive layer and/or the further adhesive layer before an application. Preferably, the adhesive layer is the first outer adhesive layer of the double-sided adhesive tape and the further adhesive layer is the second outer adhesive layer of the double-sided adhesive tape. This way, a design flexibility of the double-sided adhesive tape can be increased. Advantageously, the cuts and the adhesive layers can be adjusted according to the requirements of the field of application. For example, the adhesive layer may comprise an adhesive able to form a stronger adhesive bond than an adhesive of the further adhesive layer, preventing an accidental detaching of the double-sided adhesive tape at the first surface during a debonding or disassembly.

In a further embodiment of the invention, the cuts penetrate the further adhesive layer. In this case, the further adhesive layer may comprise the curable adhesive and the non-adhesive areas may be the areas in which the curable adhesive has been cured to the point of losing its tackiness. Alternatively, the non-adhesive areas may be defined by the masking material. This way, any generic double-sided adhesive tape with three or more permanent layers can be modified to become a double-sided adhesive tape according to the invention by cutting through the permanent layers and creating the non-adhesive areas on whichever adhesive layer is selected to be the further adhesive layer.

In a further embodiment of the invention, the further adhesive layer comprises a multitude of gaps arranged over the flaps. The gaps may be created during a manufacturing of the further adhesive layer by, for example, using a discontinuous coating process or a discontinuous printing process. The gaps may only cover one of the flaps each. Alternatively, the gaps may cover multiple flaps and comprise any shape. The gaps may be arranged in any regular or irregular pattern and cover any number of flaps. For example, the gaps may form lines arranged in parallel, each line covering a row of flaps. This way, the double-sided adhesive tape can be manufactured in a manner that saves on material and includes processes which are already used in tape manufacturing.

In a further embodiment of the invention, the double-sided adhesive tape comprises at least one intermediate layer arranged between the adhesive layer and the carrier layer and/or at least one further intermediate layer arranged between the further adhesive layer and the carrier layer, wherein the intermediate layer and/or the further intermediate layer are configured to adhere the adhesive layer and/or the further adhesive layer to the carrier layer. The intermediate layer and the further intermediate layer may be identical or different to each other. Preferably, the intermediate layer and/or the further intermediate layer are also adhesive layers. The intermediate layer and/or the further intermediate layer may comprise any adhesive and additive previously mentioned when describing the adhesive layer. Alternatively, the intermediate layer and/or the further intermediate layer may be coatings, woven, nonwoven, films or foils laminated onto the carrier layer. Preferably, the intermediate layer and/or the further intermediate layer comprise at least one material not present in the carrier layer, the adhesive layer and the further adhesive layer. In case the intermediate layer is present, it is penetrated by the cuts. In case the further intermediate layer is present, it may also be penetrated by the cuts, alternatively, the further intermediate layer may not be penetrated by the cuts and be the debondable layer configured for the disassembly of the double-sided adhesive tape. This way, a design flexibility of the double-sided adhesive tape can be further increased. Advantageously, adhesive layers that have difficulties bonding to the carrier layer can still be attached using an intermediate layer. Additionally, the intermediate layers can be used to impart additional functionality to the double-sided adhesive tape that the adhesive layers are not able to provide, such as a heat insulation, an electrical insulation or a flame retardancy for example.

In a further embodiment of the invention, the intermediate layer and/or the further intermediate layer is a debondable adhesive layer, configured to be debonded via irradiation, heating, application of a solvent and/or stretching of the double-sided adhesive tape. It is possible that the intermediate layer and/or the further intermediate layer is irreversibly debondable, preferably, the intermediate layer and/or the further intermediate layer is reversibly debondable. For example, the intermediate layer and/or the further intermediate layer may be a radiation-curable adhesive layer, wherein a further irradiation cures the intermediate layer and/or the further intermediate layer to the point of reducing its adhesive bonding strength. Alternatively, the intermediate layer and/or the further intermediate layer may be a hotmelt adhesive layer, wherein a heating melts the intermediate layer and/or the further intermediate layer, thereby reducing the adhesive bonding strength. Alternatively, the intermediate layer and/or the further intermediate layer may be a soluble adhesive layer, such as for example a rubber-based adhesive layer, wherein the solvent breaks up the polymer structure, thereby reducing the adhesive bonding strength. Alternatively, the intermediate layer and/or the further intermediate layer may be a strippable adhesive layer with an elongation at break of at least 100 %, such as an acrylonitrile-butadiene-rubber-based adhesive layer for example, wherein a stretching causes the intermediate layer and/or the further intermediate layer to taper, thereby reducing the adhesive bonding strength. This way, alternatively or additionally to being able to be debonded from a bonding partner, the double-sided adhesive tape can also be adapted to allow for a disassembly of the double-sided adhesive tape at a predefined layer. Advantageously, the double-sided adhesive tape can be disassembled and re-assembled any number of times.

In a further embodiment of the invention, the intermediate layer and/or the further intermediate layer is a debondable hook-and-loop layer, comprising a multitude of either hook elements or loop elements. A hook element is to be understood as an element protruding from a layer and comprising an end section extending parallel to a protrusion direction of the hook element. For example, the end section may be a bent section. Preferably, the bent section is bent by at least 45°. Alternatively, the end section may be a widened section. Preferably, the widened section is at least 50 % thicker than a rest of the hook element. A loop element is to be understood as an element protruding from a layer and comprising a loop section configured to receive the end section of the hook element. The loop section may form a hole for the end section to pass through and be, for example, ring-shaped. Alternatively, the loop section may comprise an indentation into which the end section may be inserted. In case of the intermediate layer and/or the further intermediate layer being hook-and-loop layers, the adhesive layer and/or further adhesive layer preferably is a corresponding hook-and-loop layers comprising corresponding hook elements or loop elements. Alternatively or additionally, the carrier layer may be a corresponding hook-and-loop layer comprising corresponding hook elements or loop elements. This way, the double-sided adhesive tape can be selectively disassembled, depending on which layers are made into hook-and-loop layers. Advantageously, a disassembly and re-assembly of the double-sided adhesive tape can be performed manually without the need for any tools.

In a further embodiment of the invention, the double-sided adhesive tape comprises at least one surface topography configured to establish Van-der-Waals bonds. The surface topography may be part of the adhesive layer, the further adhesive layer, the intermediate layer and/or the further intermediate layer. Preferably, the surface topography comprises a multitude of dry adhesive elements, each dry adhesive element comprising an end section with a face area pointing away from the layer the surface topography is a part of. The face area may be flat or comprise concave or convex sections. Preferably, a maximum diameter of the face area is 30 to 80 µm. The end section may comprise additional elements attached to the face area and configured to increase its surface area, such as microfibrils and/or nanofibrils. Preferably, the dry adhesive elements comprise an elongated section connecting the end section with the layer the surface topography is a part of. Preferably, the elongated section is shaped like a prism, such as a polygonal or oval prism. The elongated section may have a homogenous width. Alternatively, the width of the elongated section may differ locally, for example, the elongated section may widen towards the end section. The elongated section may be straight, angled or curved. The elongated section preferably has a maximum diameter of 10 to 80 µm. The elongated section preferably has a length of 50 to 150 µm. This way, a debonding and/or disassembly of the double-sided adhesive tape can be achieved without the need for viscous adhesives, thus preventing the need for coating and curing processes as well as the risk of adhesives bleeding out from the double-sided adhesive tape. Advantageously, a bonding and debonding as well as an assembly and disassembly of the double-sided adhesive tape can be performed any number of times without a significant reduction in the bonding strength.

The great amount of flexibility in terms of which adhesive and debonding technologies may be used and combined in the design of the double-sided adhesive tape is based on the unexpected revelation that the cuts and flaps significantly amplify the effect of any of these technologies, allowing debonding in the predefined peeling direction and preventing unwanted debonding in other directions in ways that go far beyond the capabilities of classical pressure-sensitive adhesive tapes.

The following figures show exemplary embodiments of the invention.
- Fig. 1: A schematic depiction of a double-sided adhesive tape in a side view.
- Fig. 2: A schematic depiction of the double-sided adhesive tape in a view from below.
- Fig. 3: A schematic depiction of two alternative embodiments of a carrier layer and a further intermediate layer of the double-sided adhesive tape in a side view.
- Fig. 4: A schematic depiction of a further double-sided adhesive tape in a side view.

For the sake of visibility, in figures depicting multiple identical elements, only one of these elements is given a reference sign.

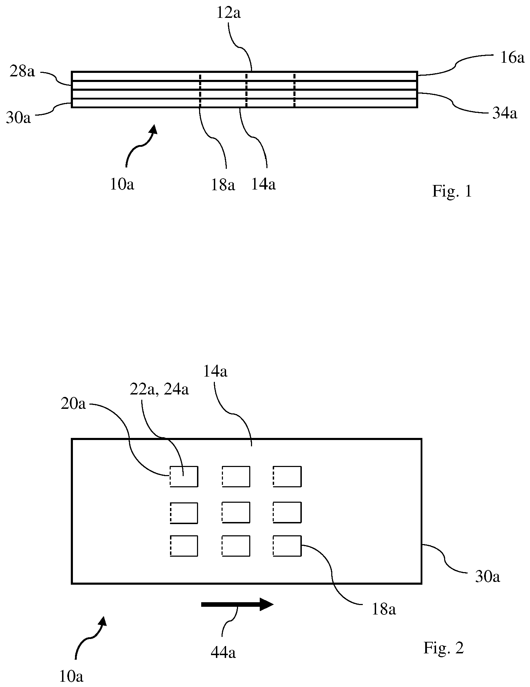

Figures 1 and 2 show a double-sided adhesive tape 10a. The double-sided adhesive tape 10a is a flat, layered sheet. Alternatively, the double-sided adhesive tape 10a could also be a transfer tape or a wound tape. The double-sided adhesive tape 10a comprises a first surface 12a. The first surface 12a comprises a first adhesive area. The double-sided adhesive tape 10a comprises an adhesive layer 16a. The adhesive layer 16a forms a first outer adhesive layer of the double-sided adhesive tape 10a. The double-sided adhesive tape 10a comprises a carrier layer 28a. The adhesive layer 16a is directly laminated onto the carrier layer 28a. Alternatively, the double-sided adhesive tape could comprise an intermediate layer (not shown) which is arranged between the adhesive layer 16a and the carrier layer 28a and adheres the adhesive layer 16a to the carrier layer 28a. The first surface 12a is a surface of the adhesive layer 16a opposite to the carrier layer 28a.

The double-sided adhesive tape 10a comprises a further intermediate layer 34a. The double-sided adhesive tape 10a comprises a further adhesive layer 30a. The further adhesive layer 30a forms a second outer adhesive layer of the double-sided adhesive tape 10a. The further intermediate layer 34a is arranged between the further adhesive layer 30a and the carrier layer 28a and adheres the further adhesive layer 30a to the carrier layer 28a. The double-sided adhesive tape 10a comprises a second surface 14a. The second surface 14a comprises a second adhesive area. The second surface 14a is a surface of the further adhesive layer 30a opposite to the carrier layer 28a or the further intermediate layer 34a.

All the layers 16a, 28a, 34a, 30a of the double-sided adhesive tape 10a are continuous layers arranged in a sandwich structure. The adhesive layer 16a comprises an adhesive which is tacky at 25°C. The adhesive may for example be a pressure-sensitive adhesive. The carrier layer 28a is a flexible plastic film. Alternatively, the carrier layer 28a could be a cured adhesive layer and/or a foam and could comprise a metal and/or a cellulose. The further intermediate layer 34a is a debondable layer. The further intermediate layer 34a is a hotmelt adhesive layer which is debonded via heating of the double-sided adhesive tape 10a. Alternatively, the further intermediate layer 34a could be a radiation-curable adhesive layer which is debonded via irradiation of the double-sided adhesive tape 10a, or a soluble adhesive layer which is debonded via adding a solvent to the double-sided adhesive tape 10a, or a strippable adhesive layer which is debonded via stretching of the double-sided adhesive tape 10a. The further adhesive layer 30a comprises a further adhesive which is tacky at 25°C. The further adhesive may for example be a pressure-sensitive adhesive.

The double-sided adhesive tape 10a comprises a multitude of cuts 18a. Each of the cuts 18a penetrate the adhesive layer 16, the carrier layer 28a, the further intermediate layer 34a and the further adhesive layer 30a. Each of the cuts 18a define a hinge 20a and a flap 22a. The cuts 18a are shown in figure 1 using dotted lines, the dotted lines defining a position and penetration depth of each of the cuts 18a. The cuts 18a are identical to each other in terms of a shape and a size. Alternatively, the cuts 18a may be different to each other in terms of a shape and/or a size. Each cut 18a consists of a starting point and an end point. The hinges 20a are defined by lines connecting the starting point and the end point. The flaps 22a are defined by the path of the cuts 18a between the starting point and the end point. In the view from below of figure 2, the cuts 18a form open rectangles. Alternatively, the cuts 18a may form any other open geometrical shape. The cuts 18a together define a peeling direction 44a which points from the hinges 20a to the flaps 22a and in which a peeling of the double-sided adhesive tape 10a is easier.

The second surface 14a comprises a multitude of non-adhesive areas 24a. Each of the non-adhesive areas 24a covers one of the flaps 22a. In case of the further adhesive layer 30a, and therefore the second surface 14a, comprising at least one curable adhesive, the non-adhesive areas 24a could be rectangular areas in which the curable adhesive has been cured to the point of losing its tackiness. Alternatively, the non-adhesive areas 24a could be rectangular strips of masking material (not shown) arranged on the second surface 14 and covering the flaps 22a. This way, when peeling the double-sided adhesive tape 10a in a direction different to the peeling direction 44a, the flaps 22a are deflected, thereby making a peeling of the double-sided adhesive tape 10a more difficult.

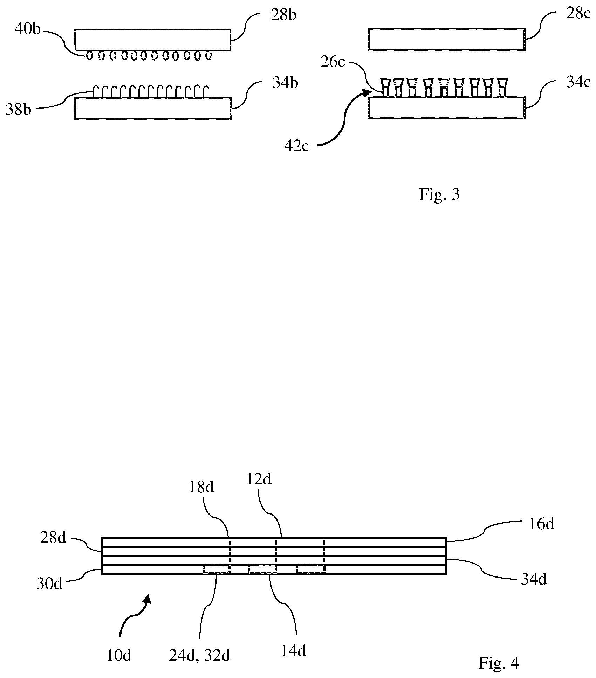

Figure 3 shows two alternative embodiments of the carrier layer 28b, 28c and the further intermediate layer 34b, 34c. For the sake of visibility, the layers 28b, 28c, 34b, 34c are shown in a debonded state. The carrier layer 28b and the further intermediate layer 34b may be debondable hook-and-loop layers, wherein the carrier layer 28b comprises a multitude of loop elements 40b and the further intermediate layer 34b comprises a multitude of hook elements 38b, or vice versa. Alternatively or additionally, the further intermediate layer 34b could comprise a further hook elements or loop elements facing away from the carrier layer 28c. Alternatively, the further intermediate layer 34c may be a debondable layer comprising a surface topography 42c configured to establish Van-der-Waals bonds. The surface topography 42c consists of a multitude of dry adhesive elements 26c. The dry adhesive elements 26c are identical to each other, alternatively, the dry adhesive elements 26c may be different to each other. The dry adhesive elements 26c each comprise an elongated section and an end section, wherein the end section widens towards a side opposite of the further intermediate layer 34c. The surface topography 42c faces the carrier layer 28c. Alternatively or additionally, the further intermediate layer 34c could comprise a further surface topography facing away from the carrier layer 28c.

Figure 4 shows a further embodiment of a double-sided adhesive tape 10d. In the following, only differences between the further embodiment and the embodiment of figures 1 and 2 will be discussed.

The double-sided adhesive tape 10d comprises an adhesive layer 16d, a carrier layer 28d and a further intermediate layer 34d. The double-sided adhesive tape 10d comprises a multitude of cuts 18d which penetrate the adhesive layer 16d, the carrier layer 28d and the further intermediate layer 34d.The double-sided adhesive tape 10d comprises a further adhesive layer 30d. The further adhesive layer 30d is a discontinuous adhesive layer. The further adhesive layer 30d defines a second surface 14d of the double-sided adhesive tape 10d, the second surface 14d comprising a discontinuous adhesive. The second surface 14d comprises non-adhesive areas 24d, which are gaps 32d of the further adhesive layer 30d and therefore devoid of adhesive. The gaps 32d are shown using dotted rectangles.

The adhesive layer 16a, 16b, 16c, 16d as well as the further adhesive layer 30a, 30b, 30c, 30d may also be debondable layers and comprise any of the disclosed methods for achieving a debondable adhesion on one of both their sides. This way, it is possible to achieve double-sided adhesive tapes 10a, 10b, 10c, 10d which can be adjusted to be debondable at any desired layer and which may be manufactured using only renewable and/or recyclable materials.

### Reference signs

- 10: Double-sided adhesive tape
- 12: First surface
- 14: Second surface
- 16: Adhesive layer
- 18: Cut
- 20: Hinge
- 22: Flap
- 24: Non-adhesive area
- 26: Dry adhesive element
- 28: Carrier layer
- 30: Further adhesive layer
- 32: Gap
- 34: Further intermediate layer
- 38: Hook element
- 40: Loop element
- 42: Surface topography
- 44: Peeling direction

## Claims

1. Double-sided adhesive tape (10a-d) comprising a first surface (12a-d) with a first adhesive area, and a second surface (14a-d) with a second adhesive area, wherein the first surface (12a-d) and the second surface (14a-d) are opposite to each other, further comprising an adhesive layer (16a-d) and a multitude of cuts (18a-d), each of the cuts (18a-d) penetrating the adhesive layer (16a-d) and defining a hinge (20a-d) and a flap (22a-d), and wherein the second surface (14a-d) comprises a multitude of non-adhesive areas (24a-d), each of the non-adhesive areas (24a-d) covering one of the flaps (22a-d), and wherein either the double-sided adhesive tape (10a-d) comprises a carrier layer (28a-d) and a further adhesive layer (30a-d), wherein the carrier layer (28a-d) is arranged between the adhesive layer (16a-d) and the further adhesive layer (30a-d) and the cuts (18a-d) either penetrate the carrier layer (28a-d) and the further adhesive layer (30a-d), or just the carrier layer (28a-d) while the further adhesive layer (30d) comprises a multitude of gaps (32) arranged over the flaps (22d), or the double-sided adhesive tape (10a-d) is a transfer tape, consisting of the adhesive layer (16a-d) as well as one or two removable layers covering adhesive surfaces of the adhesive layer (16a-d), wherein the adhesive layer (16a-d) comprises fillers and/or foaming agents.

2. Double-sided adhesive tape (10d) according to claim 1, wherein the second surface (14d) comprises at least one discontinuous adhesive, and the non-adhesive areas (24d) are areas devoid of adhesive.

3. Double-sided adhesive tape (10a-c) according to claim 1, wherein the second surface (14a-c) comprises at least one curable adhesive, and the non-adhesive areas (24a-c) are areas in which the curable adhesive has been cured to the point of losing its tackiness.

4. Double-sided adhesive tape (10a-c) according to claim 1, wherein the non-adhesive areas (24a-c) are defined by masking material arranged on the second surface (14a-c).

5. Double-sided adhesive tape (10a-d) according to any of the preceding claims, comprising at least one intermediate layer arranged between the adhesive layer (16a-d) and the carrier layer (28a-d) and/or at least one further intermediate layer (34a-d) arranged between the further adhesive layer (30a-d) and the carrier layer (28a-d), wherein the intermediate layer and/or the further intermediate layer (34a-d) are configured to adhere the adhesive layer (16a-d) and/or the further adhesive layer (30a-d) to the carrier layer (28a-d).

6. Double-sided adhesive tape (10a-d) according to claim 5, wherein the intermediate layer and/or the further intermediate layer (34a-d) is a debondable adhesive layer, configured to be debonded via irradiation, heating, application of a solvent and/or stretching of the double-sided adhesive tape (10a-d).

7. Double-sided adhesive tape (10b) according to claim 5, wherein the intermediate layer and/or the further intermediate layer (34b) is a debondable hook-and-loop layer, comprising a multitude of either hook elements (38b) or loop elements (40b).

8. Double-sided adhesive tape (10c) according to any of the preceding claims, comprising at least one surface topography (42c) configured to establish Van-der-Waals bonds.

## Patentansprüche

1. Doppelseitiges Klebeband (10a-d) mit einer ersten Oberfläche (12a-d), welche eine erste Klebefläche aufweist, und mit einer zweiten Oberfläche (14a-d), welche eine zweite Klebefläche aufweist, wobei die erste Oberfläche (12a-d) und die zweite Oberfläche(14a-d) einander gegenüberliegend angeordnet sind, und mit einer Klebstoffschicht (16a-d) sowie mehreren Einschnitten (18a-d), wobei jeder der Einschnitte (18a-d) die Klebstoffschicht (16a-d) durchdringt und ein Scharnier (20a-d) sowie eine Klappe (22a-d) definiert, wobei die zweite Oberfläche (14a-d) eine Vielzahl von nicht-haftenden Bereichen (24a-d) aufweist, wobei jeder der nicht-haftenden Bereiche (24a-d) eine der Klappen (22a-d) bedeckt, wobei entweder das doppelseitige Klebeband (10a-d) eine Trägerschicht (28a-d) und eine weitere Klebstoffschicht (30a-d) aufweist, wobei die Trägerschicht (28a-d) zwischen der Klebstoffschicht (16a-d) und der weiteren Klebstoffschicht (30a-d) angeordnet ist und die Einschnitte (18a-d) entweder sowohl die Trägerschicht (28a-d) als auch die weitere Klebstoffschicht (30a-d) durchdringen, oder nur die Trägerschicht (28a-d) durchdringen während die weitere Klebstoffschicht (30d) eine Vielzahl von Lücken (32) aufweist, welcher über den Klappen (22d) angeordnet sind, oder das doppelseitige Klebeband (10a-d) ist ein Transferklebeband welches aus der Klebstoffschicht (16a-d) sowie einer oder zwei entfernbaren Schichten, welche Klebeflächen der Klebstoffschicht (16a-d) bedecken, besteht, wobei die Klebstoffschicht (16a-d) Füllstoffe und/oder Schäumungsmittel aufweist.

2. Doppelseitiges Klebeband (10d) gemäß Anspruch 1, wobei die zweite Oberfläche (14d) zumindest einen diskontinuierlichen Klebstoff aufweist und die nicht-haftenden Bereiche (24d) keinen Klebstoff aufweisen.

3. Doppelseitiges Klebeband (10a-c) gemäß Anspruch 1, wobei die zweite Oberfläche (14a-c) zumindest einen vernetzbaren Klebstoff aufweist und die nicht-haftenden Bereiche (24a-c) Bereiche sind, in denen der vernetzbare Klebstoff so weit vernetzt wurde, dass er seine Haftung verloren hat.

4. Doppelseitiges Klebeband (10a-c) gemäß Anspruch 1, wobei die nicht-haftenden Bereiche (24a-c) durch Abdeckungsmaterial definiert sind, welches auf der zweiten Oberfläche (14a-c) angeordnet ist.

5. Doppelseitiges Klebeband (10a-d) gemäß einem der vorhergehenden Ansprüche, mit zumindest einer Zwischenschicht, welche zwischen der Klebstoffschicht (16a-d) und der Trägerschicht (28a-d) angeordnet ist, und/oder zumindest eine weitere Zwischenschicht (34a-d), welche zwischen der weiteren Klebstoffschicht (30a-d) und der Trägerschicht (28a-d) angeordnet ist, wobei die Zwischenschicht und/oder die weitere Zwischnschicht (34a-d) derartet ausgestaltet ist, dass sie die Klebstoffschicht (16a-d) und oder die weitere Klebstoffschicht (30a-d) an der Trägerschicht (28a-d) befestigt.

6. Doppelseitiges Klebeband (10a-d) gemäß Anspruch 5, wobei die Zwischenschicht und/oder die weitere Zwischenschicht (34a-d) eine lösbare Klebstoffschicht ist, welche derart ausgestaltet ist, dass sie mittels Bestrahlung, Beheizung, Beifügen eines Lösemittels und/oder Dehnung des doppelseitigen Klebebands (10a-d) lösbar ist.

7. Doppelseitiges Klebeband (10b) gemäß Anspruch 5, wobei die Zwischenschicht und/oder die weitere Zwischenschicht (34b) eine lösbare Klettschicht ist und eine Vielzahl von entweder Hakenelementen (38b) oder Maschenelementen (40b) aufweist.

8. Doppelseitiges Klebeband (10c) gemäß einem der vorhergehenden Ansprüche, aufweisend zumindest eine Oberflächentopographie (42c) welche derart ausgestaltet ist, dass sie Van-der-Waals-Verbindungen ausbilden kann.

## Revendications

1. Un ruban adhésif à double-face (10a-d) comprenant une première surface (12a-d) dotée d'une première couche adhesive, et une seconde surface (14ad) dotée d'une seconde couche adhesive, pour lequel la première surface (12a-d) et la seconde surface (14a-d) sont opposées l'une par rapport à l'autre, et comprenant une couche adhésive (16a-d) et une multitude de découpages (18a-d), chacun de cess découpages (18a-d) pénétrant la couche adhesive (16a-d) et définissant ainsi une charnière (20a-d) et un rabat (22ad), et par lequel la seconde surface (14a-d) comprend une multitude de zones non-adhésives (24a-d), chacune des zones non-adhésives (24a-d) recouvrant un des rabats (22a-d), et pour lequel le ruban adhésif double-face (10a-d) comprend une couche de support (28a-d) et une autre couche adhesive (30ad), pour lequel la couche de support (28a-d) est positionnée entre la couche adhésive (16a-d) et une couche adhesive supplémentaire (30a-d) et les découpages (18a-d) soit pénètrent la couche de support (28a-d) et la couche ashésive supplémentaire (30a-d), soit seulement la couche de support (28a-d) alors que la couche adhesive supplémentaire (30d) comprend une multitude d'espacements (32) disposés par-dessus les rabats (22d), soit le ruban adhésif à double-face (10a-d) est un film de transfert, consistant en une couche adhesive (16a-d) ainsi que une ou deux couches amovibles recouvrant les zones adhesives de la couche adhesive (16a-d), pour lequel la couche adhesive (16a-d) contient des charges et/ou des agents moussants.

2. Un ruban adhésif double-face (10d) selon la revendication 1, **caractérisé en ce que** la seconde surface (14d) comprend au moins un adhésif discontinu, et les zones non-adhésives (24d) sont dépourvues d'adhésif.

3. Un ruban adhésif double-face (10a-c) selon la revendication 1, **caractérisé en ce que** la seconde surface (14a-c) comprend au moins un adhesive réticulable, et les zones non-adhésives (24a-c) sont des zones pour lesquelles l'adhésif réticulable a été réticulé à tel point qu'il a perdu toute pégosité.

4. Un ruban adhésif double-face (10a-c) selon la revendication 1, **caractérisé en ce que** les zones non-adhésives (24a-c) sont délimitées par l'utilisation d'un masque appliqué sur la seconde surface (14a-c).

5. Un ruban adhésif double-face (10a-d) selon toutes les revendications précédentes, et **caractérisé en ce qu'**il comprend au moins une couche intermédiaire située entre la couche adhésive (16a-d) et la couche de support (28a-d) et/ou au moins une couche internédiaire supplémentaire (34a-d) située entre la couche adhésive supplémentaire (30a-d) et la couche de support (28a-d), pour lequel la couche intermédiaire et/ou la couche intermédiaire supplémentaire (34a-d) sont configurées pour adhérer la couche adhésive (16a-d) et/ou la couche adhésive supplémentaire (30a-d) à la couche de support (28a-d).

6. Un ruban adhésif double-face (10a-d) selon la revendication 5, **caractérisé en ce que** la couche intermédiaire et /ou la couche intermédiaire supplémentaire (34a-d) est une couche adhesive amovible, configure pour pouvoir être détachée via irradiation, chauffage, application d'un solvant et/ou étirrement du ruban adhésif double-face (10a-d).

7. Un ruban adhésif double-face (10b) selon la revendication 5, **caractérisé en ce que** la couche intermédiaire et /ou la couche intermédiaire supplémentaire (34b) est une couche adhésive amovible selon un système de fermeture autoagrippante (hook-and-loop), comprenant une multitude de crochets (hook) (38b) ou de boucles (loop) (40b).

8. Un ruban adhésif double-face (10c) selon toutes les revendications précédentes, **caractérisé en ce qu'**au moins une topographie de surface (42c) est configurée pour promouvoir des liaisons de type Van-der-Waals.
